Europäisches Patentamt

(19) European Patent Office

Office européen des brevets

(11) Publication number: **0 459 935 A1**

## (12) EUROPEAN PATENT APPLICATION

(21) Application number: **91610047.2**

(22) Date of filing: **29.05.91**

(51) Int. Cl.⁵: **A22C 7/00**

(30) Priority: **29.05.90 DK 1331/90**

(43) Date of publication of application:
**04.12.91 Bulletin 91/49**

(84) Designated Contracting States:
**BE DE DK ES FR GB IT NL**

(71) Applicant: **Scanio Food Equipment A/S**
**Blytaeckker vej 2-6**
**DK-9000 Aalborg (DK)**

(72) Inventor: **Thorup, Jens Havn**
**Christiansgade 62, 1**
**DK-9000 Aalborg (DK)**

(74) Representative: **Pedersen, Soeren Skovgaard**
**(DK) et al**
**c/o Patentingenioer K. Skoett-Jensen**
**Lemmingvej 225**
**DK-8361 Hasselager (DK)**

(54) Unloader for press towers used in the meat industry.

(57)   A catching arrangement for use when emptying press towers, especially applied in the meat industry, e.g. for processing hams. In a press tower moulds in horizontal layers are stacked on top of one another with intermediate spacing frames with covers for the moulds. The catching arrangement comprises a first set of catchers, e.g. suction cups (34), by which the frames are removed, as well as a second set of catchers, e.g. designed as keys (46, 48) engaging into a groove on the reinforcement strips of the moulds and by which the moulds are lifted in rows. The catching arrangement can be designed as a detached equipment suspended in e.g. a motor hoist or form part of a robot, machine or construction for automatic emptying of press towers.

EP 0 459 935 A1

Jouve, 18, rue Saint-Denis, 75001 PARIS

FIG. 10.

The present invention concerns a catcher arrangement for use when emptying press towers comprising a base frame with at least a column at each corner, and in which moulds can be stacked on top of one another in rows with intermediate spacing frames with covers reaching down into the underlying moulds and a finishing top frame also with a cover.

During processing the hams are placed under press in moulds in a press tower comprising a base frame with a column at each corner in which the moulds can be stacked on top of one another in rows. Typically there are three to five moulds in a horizontal row and five in the vertical direction. On top of the first row being placed at the base frame is put an intermediate frame which at its lower side has a cover fitting into the lower moulds. The next row of moulds is placed on the intermediate frame and so on moulds and intermediate frames are placed until finishing with an upper frame which at its lower side also has a cover that fits down into the uppermost row of moulds. At the columns are tightening fittings by which the upper frame can be tightened and retained. In order to prevent deformation of the sides of the moulds during the relatively heavy pressure at the boiling, the sides are reinforced along the outside edge. The press tower is emptied manually, which is a physically hard task. A mould with its contents may weigh up to twenty kilos or more, and the upper frame and the intermediate frames are even heavier. Normally it takes two men to empty a press tower.

The purpose of the invention is to provide a device for emptying these press towers. This is solved by a catching arrangement comprising a first set of catchers designed to remove the upper and the intermediate frames and an independent second set of catchers designed to enter into engagement with downwardly facing carrier surfaces at the outer sides of the moulds, preferably for lifting off a whole row of moulds at a time, as the catching arrangement can go down or go in between the columns of the press tower. By activating the first set of catchers a frame can be retained and it can be lifted off. At the delivery site the first set of catchers is disengaged and the frame is released. The catching arrangement is then brought back to the press tower and by the second set of catchers a row of moulds is locked, and at the delivery site the second set of catchers is released. The catching arrangement can be moved in a variety of ways, it may e.g. by a high degree of automatization be built into a robot, machine or construction where the frames are delivered at one place and the moulds at another place on a stripping table where the removal of the moulds takes place. By a simpler constructive design the catching arrangement is designed for suspension in an electrically driven motor hoist and provided with a maneuvering handle at or in which the control switches for the various functions are gathered. Thus the motor hoist and the catching arrangement can be controlled without necessitating letting go of the maneuvering handle. It is preferred that the catching arangement lifts off a whole row of moulds at a time, but if a simpler constructive solution is chosen, then the lifting can be reduced to a single mould or just a few.

The first set of catchers is preferably designed as suction cups arranged such that they can be applied to flat portions of the frames, preferably at the associated covers. The covers present themselves as a large planar suitable point of application for suction cups, their engaging ability being further increased by supplying a vacuum to them. The suction cups are expediently mounted at compressed-air cylinders to bring these into and out of engagement. At delivery the suction cups are pulled away such that they are certain to release the frames. It is obvious that the first set of catchers can be designed in another way, e.g. having hooks or jaws gripping around the frame or entering into engagement with downward faces of this.

The second set of catchers is suitably provided as keys which by turning can enter into engagement with the moulds preferably in a groove in a reinforcement strip at the longitudinal outer side of the moulds. When the keys are shaped double faced they can operate two adjacent moulds. The simplest embodiment of the keys consists of a short shaft piece with a cross pin at the end designed for engagement into the grooves in the reinforcement strips. At lifting off a whole row of moulds you have the advantage that a mutual locking takes place such that the risk of dropping the moulds is minimal. The keys can, of course, also be designed such that they catch below the reinforcement strips but then the same locking effect is not achieved. The catchers can also be designed such that they enter into engagement with other portions of the moulds, by way of example they may be designed thus that they reach in below the base of the mould or enter into engagement with a nosing from the sidewall to the base. However, it is crucial that the catchers are comparatively flat in their leading down position such that they can pass down between the moulds as these are placed rather closely in the press towers.

In a simple constructive design the keys are connected in sets at either side by a connecting rod via joints such that the keys are turned by displacing the connecting bar in its longitudinal direction preferably by a compressed-air cylinder.

In order to serve press towers and moulds of a variety of sizes the catching arrangement can be designed such that the second set of catchers is mounted at a detachable frame portion such that it can be exchanged by another adapted to the actual number of moulds and their size. The first set of catchers can also be mounted at this portion of the frame corresponding to removing a control board with the vital items from place to place.

The invention shall be described in further detail in the following with reference to the accompanying drawing in which:-

Fig. 1 is a lateral view of a known press tower per se, filled with moulds and the clasps being tightened,

Fig. 2 is an end view and without clasps at the columns,

Fig. 3 is a cross-section inside the press tower just above the base and the first row of moulds shown transparently,

Fig. 4 is an intermediate frame seen from above and indicating the positions of the columns when placed in the press tower,

Fig. 5 is a direct lateral view of the intermediate frame,

Fig. 6 is the upper frame as seen directly from above and indicating the positions of the corner columns when placed in the press tower,

Fig. 7 is a direct lateral view of the upper frame,

Fig. 8 is a direct lateral view of a mould,

Fig. 9 is the mould as seen directly from above,

Fig. 10 is a direct lateral view of the catching arrangement according to the invention, and

Fig. 11 is the catching arrangement as seen directly from above.

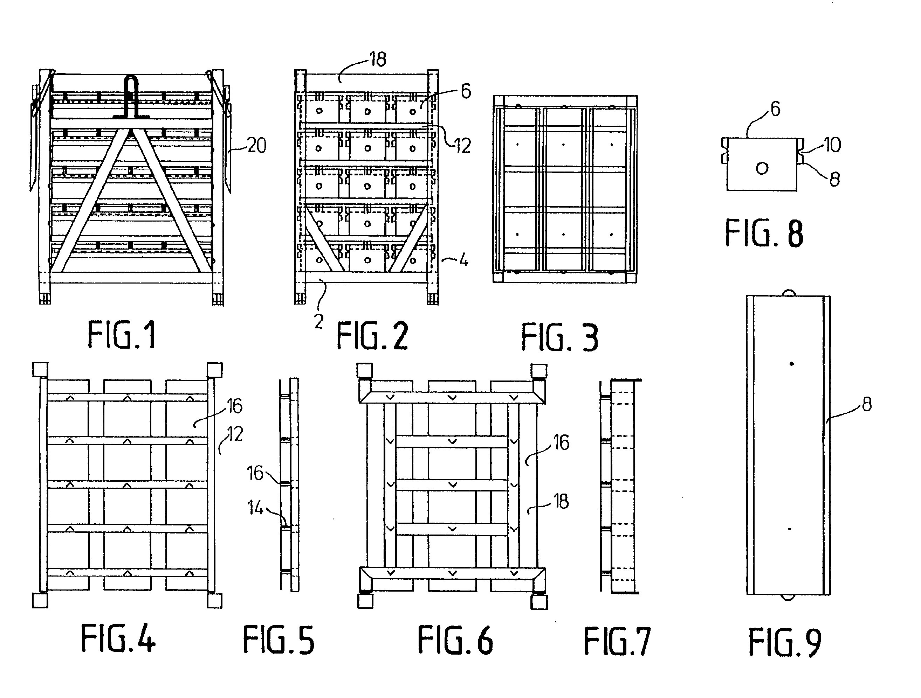

Figs. 1-3 of the drawing illustrate a usual press tower consisting of a base frame 2 having a column 4 at each corner. As is evident from the drawing the press tower is designed for five rows of moulds with three in each row. The moulds 6 are elongated vessels with an under quadratic cross section. To withstand the pressing power the outer sides of the mould along the opening have been reinforced by strengthening strips 8 with a longitudinal groove 10. The first row of moulds is placed at the base frame and on top is placed an intermediate frame 12 (Figs. 4, 5) which at its lower side in spacing portions 14 carry covers 16 fitting down into the moulds and being supported by their contents. The moulds become mutually positioned when the intermediate frame is put down and the covers slide down into them. The next row of moulds is placed on the intermediate frame and on these is placed yet another intermediate frame and so forth until finishing with an upper frame 18 (Figs. 6, 7) on the upper row of moulds. The upper frame actually only distinguishes itself from the intermediate frames by a heavier embodiment. The tightening is performed by clasps 20 at the columns. These comprise a hook running at the outer side and up above the top of the column and engages at the upper frame. The other end of the hook is fastened to a weighing arm being fastened to the column by one end and by which the tightening is performed by depressing the weighing arm towards the column.

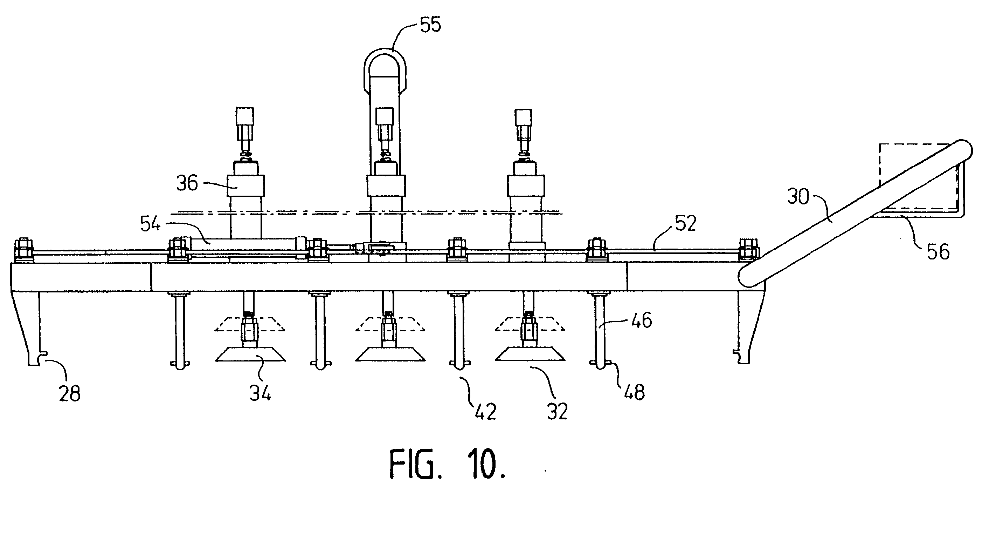

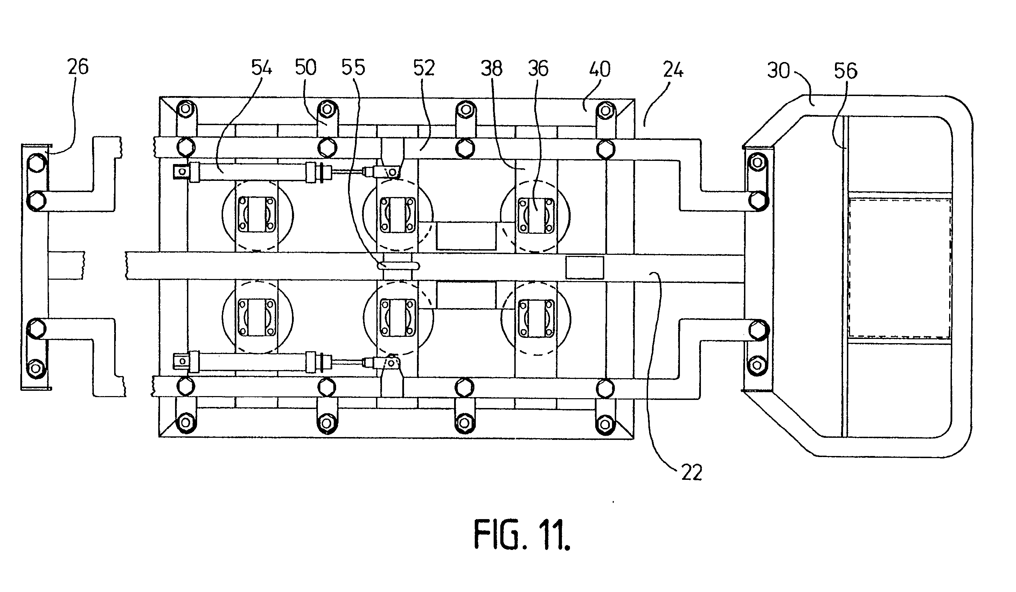

The catching arrangement shown in Figs. 10 and 11 comprises a frame with a continuous support 22 and a hereto attached frame 24 in two halves. The support is at either end provided with a crossbeam 26, the under edge 28 of which is designed to being supported by the upper edges of the moulds. One crossbeam is provided with a U-handle 30 for controlling the catching arrangement. For lifting off the upper frame and the intermediate frames the catching arrangement has a first set of catchers 32 in the form of suction cups 34 mounted at the end of air cylinders 36 fastened to bridges 38 between side bars 40 of the frame and the support. For lifting off a whole row of moulds at a time the catching arrangement is provided with a second set of catchers 42 in the form of a row of keys 44 pivotally embedded in the side bars of the frame and the end crossbeams of the support. The keys consist of a short round bar 46, which at its lower end carries a short cross pin 48 designed for engagement into the groove 10 in the side reinforcement strips 8 of the moulds. At the top the keys via pivotings 50 at either side are coupled together by a longitudinal bar 52 which can be displaced forwardly and backwardly in the longitudinal direction by means of a compressed-air cylinder which by its casing is fastened to the frame and by the piston rod to the longitudinal bar. By displacing the connecting bar the keys are turned to engaging the moulds and when these have been lifted off they are released by turning the keys back to the initial position.

The entire catching arrangement can be suspended in a suspension hook 54 in a motor driven hoist not illustrated.

The motor hoist and the compressed-air cylinders for both the first and the second set of catchers can be controlled from a control box situated in a cage 66 by the handle such that they can be operated simultaneously with maneuvering the total catching arrangement as a whole.

By designing the first set of catchers as suction cups for lifting off the intermediate and the upper frames the situation is utilized that the mould covers are connected to the frames and planes, and consequently provide a good point for application of the suction cups.

By designing the second set of catchers as keys use is made of the groove resulting from the folding of plate into strengthening strips provided for reinforcement purposes. The folding is solely performed in order to increase the strength of the profile in the transverse direction. By turning the keys into the grooves all the moulds are locked together as a unit and a safe engagement of all the moulds is achieved at their strongest point. The release is carried out equally safely when the keys are turned out of engagement.

The catching arrangement consequently utilizes the features of the existing moulds and frames and such that it can be immediately applied without any changes to the existing equipment.

In a further development of the catching arrangement for adapting this to individual press towers with a different number of moulds in the rows the second set of catchers can be detachably mounted such that they can be replaced by a set of catchers adapted to the number of moulds in the actual press tower. It can also be designed such that both the second and the first set of catchers can be exchanged as a unit.

The catching arrangement can be a separate equipment as illustrated by the drawing, or by a higher degree of automatization it can be incorporated into a machine, construction or robot which automatically and in the correct sequence lifts off the frames and put these aside and lifts off a whole row of moulds and places these at a stripping table.

## Claims

1. A catching arrangement for use when emptying press towers especially applied in the meat industry, e.g, for processing hams and consisting of a base frame having at least one column at each corner, and in which moulds (6) can be stacked on top of one another in rows with intermediate spacing frames (12) with covers (16) reaching down into the underlying moulds and a finishing upper frame (18) likewise having a cover (16), characterized in that it comprises a first set of catchers (32) designed to remove the upper and intermediate frames (12, 18) and a thereof independent second set of catchers (42) designed for entering into engagement with downwardly facing carrier surfaces at the outer sides of the moulds, preferably for lifting off a whole row of moulds at a time, as the catching arrangement can go down or go in between the columns of the press tower.

2. A catching arrangement according to claim 1, characterized in that the first set of catchers (32) is designed as suction cups (34) arranged such that they can be applied to the flat portions of the frames (12, 18), preferably at the associated covers (16).

3. A catching arrangement according to claim 2, characterized in that the suction cups (34) are mounted at compressed-air cylinders (36) to bring these into and out of engagement.

4. A catching arrangement according to claim 1, characterized in that the second set of catchers (42) is designed as keys (46, 48), which by turning can be brought into engagement with the moulds, preferably in a groove (10) in a reinforcement strip (8) at the outer side of the moulds.

5. A catching arrangement according to claim 4, characterized in that the keys (46, 48) are shaped double faced such that they by turning can enter into engagement with two adjacent moulds.

6. A catching arrangement according to claims 4 or 5 characterized in that the keys (46, 48) are connected in sets at either side by a connecting rod (52) via joints such that the keys are turned by displacing the connecting rod in its longitudinal direction preferably by a compressed-air cylinder (54).

7. A catching arrangement according to claim 1, characterized in that the second set of catchers (42) for the moulds is mounted at a detachable frame portion such that it can be exchanged by another, adapted to size and to number of moulds in the press tower.

8. A catching arrangement according to claim 7, characterized in that the first set of catchers (32) is mounted at the same exchangeable frame portion.

9. A catching arrangement according to claim 1, characterized in that it is designed applicable for suspension in an electrically driven motor hoist and provided with a maneuvering handle, at or in which the operating switches for the various functions are gathered.

10. A catching arrangement according to claim 1, characterized in that this is incorporated into a robot, machine or construction, where the frames (12, 18) are delivered at one place and the moulds (6) at another, preferably at a stripping table.

FIG.1  FIG.2  FIG.3  FIG.4  FIG.5  FIG.6  FIG.7  FIG.8  FIG.9

FIG. 10.

EP 0 459 935 A1

FIG. 11.

**European Patent Office**

# EUROPEAN SEARCH REPORT

Application Number

EP 91 61 0047

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 530 025 (TEBEL MACHINEFABRIKEN)<br>* the whole document *<br>--- | 1,4,9 | A22C7/00 |
| A | US-A-4 709 446 (FEAUTO)<br>--- | | |
| A | FR-A-2 485 884 (ARMOR-INOX)<br>--- | | |
| A | EP-A-0 313 691 (OSCAR MAYER FOODS)<br>--- | | |
| A | DE-U-8 001 714 (DEJONGE)<br>--- | | |
| P,A | EP-A-0 424 325 (VIGNOLA)<br><br>----- | | |

TECHNICAL FIELDS SEARCHED (Int. Cl.5)

A22C
A01J
B30B

The present search report has been drawn up for all claims

| Place of search | Date of completion of the search | Examiner |
|---|---|---|
| THE HAGUE | 26 AUGUST 1991 | De Lameillieure |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document